# EUROPÄISCHE PATENTSCHRIFT

(11) **EP 3 128 834 B1**
(45) Veröffentlichungstag und Bekanntmachung des Hinweises auf die Patenterteilung: **02.09.2020**
(21) Anmeldenummer: 16707072.1
(22) Anmeldetag: 25.02.2016
(51) Int. Cl.: A01L 1/00

(54) **HUFSCHUTZ FÜR PFERDE ODER DERGLEICHEN HUFTIERE**
HOOF-PROTECTION MEANS FOR HORSES OR SIMILAR HOOVED ANIMALS
PROTECTION DE SABOT DE CHEVAUX OU D'ANIMAUX ONGULÉS ANALOGUES

(30) Priorität: 06.03.2015 DE 102015103320
(43) Veröffentlichungstag der Anmeldung: 15.02.2017
(73) Patentinhaber: Pellkofer, Rudolf, 84088 Neufahrn (DE); Gabrich, Donald, 65187 Wiesbaden (DE)
(72) Erfinder: PELLKOFER, Rudolf, 84088 Neufahrn (DE)
(74) Vertreter: advotec.
(86) Internationale Anmeldenummer: PCT/EP2016/053973
(87) Internationale Veröffentlichungsnummer: WO 2016/142182

(56) Entgegenhaltungen:
- WO-A1-86/00194
- WO-A1-2004/023871
- WO-A1-2005/092091
- WO-A1-2006/029866
- CH-A- 174 236
- DE-A1- 4 445 938
- JP-A- 2000 023 610
- US-A1- 2012 222 871

## Beschreibung

Die vorliegende Erfindung betrifft einen Hufschutz für Pferde oder dergleichen Huftiere mit einem eine Hufauflagefläche, welche im an einem Huf befestigten Zustand am Huf anliegt, und einer Bodenfläche, die im am Huf befestigten Zustand die den Boden kontaktierende Unterseite bildet, aufweisenden hufeisenförmigen Grundkörper, welcher zwei von einem gemeinsamen Mittelabschnitt ausgehende Schenkel mit jeweils einer Außen- und einer Innenseite aufweist.

Derartige Hufschutze sind insbesondere in Form von herkömmlichen Hufeisen bekannt. Derartige, seit langer Zeit verwendete Hufeisen sind in der Regel aus Metall, insbesondere Eisen gefertigt. Solche Hufeisen haben jedoch diverse Nachteile. So ist der sogenannte Klirreffekt bei den herkömmlichen Hufeisen sehr hoch. Unter Klirreffekt versteht man den starken Rückstoß, der ins Pferdebein abgegeben wird, wenn ein beschlagener Huf beispielsweise auf Asphalt aufsetzt. Gerade bei empfindlichen Pferden führt dies zu Fühligkeiten. Durch diesen Klirreffekt entsteht bei vielen Pferden oft ein schleifendes Gangbild. Die Pferde versuchen dabei, den hohen Aufschlagdruck und damit den Klirreffekt abzumildern. Im Gegensatz hierzu zeigt ein gesundes, unbeschlagenes Pferd agile Bewegungen und einen idealen Bewegungsablauf ohne "Schleifgang".

Durch die genannten Probleme wird bei Pferden eine erhebliche Einschränkung der Leistungsbereitschaft beobachtet. Zudem stellen sich häufig Gelenkprobleme ein. Die Statistik zeigt, dass Pferde, die in Deutschland geschlachtet werden, zu mehr als zwei Drittel wegen Gelenkschäden mit einem Durchschnittsalter von 7 Jahren diesen Weg zu gehen haben. Der leistungsfähigste Lebensabschnitt eines Pferdes im Sport und im Allgemeinen wäre allerdings vom 10. bis zum 15. Lebensjahr.

Um die geschilderten Nachteile zu vermeiden, wurden in der Vergangenheit unterschiedliche Hufschutzsysteme entwickelt. Die meisten dieser Systeme sind so aufgebaut, dass auf ein herkömmliches Hufeisen Laufbeläge aller Art aufgebracht werden. Diese meist aus Kunststoff bestehenden Laufbeläge sollen die oben geschilderten Klirreffekte abmildern. Diese mehrlagigen Hufbeschläge sind jedoch sehr aufwändig und kostenintensiv in der Herstellung und der Montage. Aus diesem Grunde schrecken viele Anwender vor derartigen Beschlägen zurück. Zudem sind solche Hufschutzsysteme nicht für alle Böden geeignet und es dauert oft eine längere Zeit, bis sich die Tiere an derartige Beschläge gewöhnt haben.

CH 174 236 A beschreibt ein Hufeisen, dessen Schenkel an der Innenseite eine Mehrzahl von Einbuchtungen aufweisen. Derartige Hufeisen werden auch in WO 86/00194 A1, WO 2004/023871 A1 und WO 2005/092091 A1 beschrieben. Durch diese Einbuchtungen wird eine bessere Verwindbarkeit und Flexibilität des Hufeisens erreicht. Hierdurch kann der o. g. Klirreffekt bereits etwas abgemildert werden. Allerdings bleibt das Problem des Klirreffekts auch bei den aus dem Stand der Technik bekannten Hufeisen bis zu einem gewissen Grad bestehen.

Der Erfindung liegt die Aufgabe zugrunde, die o.g. Nachteile aus dem Stand der Technik zu überwinden. Der Erfindung liegt insbesondere die Aufgabe zugrunde, einen Hufschutz zur Verfügung zu stellen, welcher den Klirreffekt weiter vermindert und gleichzeitig einfach und kostengünstig herstellbar ist.

Diese Aufgabe wird erfindungsgemäß durch einen Hufschutz mit den Merkmalen des Anspruchs 1 gelöst.

Beim erfindungsgemäßen Hufschutz ist dem hufeisenförmigen Grundkörper eine Füllmasse aus verformbarem Kunststoff zugeordnet, die vor oder nach dem Montieren des hufeisenförmigen Grundkörpers am Huf eines Tieres in die Einbuchtungen eingebracht wird.

Bei der Füllmasse handelt es sich beispielsweise um epoxidhaltige elastomere Verbindungen, Epoxidharze etc., welche beispielsweise mit Metall, insbesondere Stahl angereichert sein können. Ein Beispiel ist das Epoxidharz EP904B. Ein weiteres Beispiel sind Zwei-Komponenten-Epoxy-Elastomere.

Durch das Einfüllen/Einmodellieren/Einsetzen von Füllmasse, insbesondere von Füllmasse aus Kunststoff wird der o.g. Klirreffekt weiter abgeschwächt. Der hufeisenförmige Grundkörper wird insgesamt noch "weicher" und elastischer, was die Schlagkräfte beim Auffußen auf z.B. Asphalt weiter reduziert. Der Huf wird so entlastet und die Gesunderhaltung der Gliedmaßen und Gelenke des Tieres wird stark gefördert. Durch die Tatsache, dass die Einbuchtungen an der Innenseite des hufeisenförmigen Grundkörpers eingebracht sind und dort der flexible Füllstoff eingebracht wird bewirkt zudem, dass der Hufschutz von der Außenseite zur Innenseite weicher wird. Hierbei wird die Anatomie des Pferdehufes nachgeahmt, bei dem ebenfalls der Randbereich des Hufes härter ist als der innere Bereich. Durch die Verminderung des Klirreffekts entsteht auch weniger Gelenkverschleiß, was zu einer höheren Leistungsfähigkeit des Tieres führt. Ferner ist ein positiver Einfluss auf die Biomechanik, die Balance und den Hufmechanismus durch die stärkere Verwindbarkeit des Hufschutzes zu beobachten.

Beim erfindungsgemäßen Hufschutz weisen die Einbuchtungen, insbesondere im Bereich der Hufauflagefläche jeweils eine Abschrägung auf, die derart ausgebildet ist, dass sich die Einbuchtungen von der Hufauflagefläche in Richtung der Bodenfläche mindestens abschnittsweise verjüngen. Eine derartige Form der Einbuchtungen ist äußerst vorteilhaft, da eingebrachte Füllmasse in den Einbuchtungen wesentlich besser gehalten wird und beim Gehen oder Laufen des Pferdes nicht herausfällt.

Vorzugsweise sind die Einbuchtungen im Wesentlichen U-förmig ausgebildet. Eine derartige Form ist einfach herstellbar und gut geeignet, Füllmasse aufzunehmen. Es sind jedoch andere Formen von Einbuchtungen denkbar (z.B. eckige Formen, Schlitze, etc.).

Bei einer bevorzugten Ausführungsform des erfindungsgemäßen Hufschutzes weist der hufeisenförmige Grundkörper eine Mehrzahl von durchgreifenden Nagellöchern zum Hindurchführen von Hufnägeln auf, wobei die Nagellöcher in der Bodenfläche des hufeisenförmigen Grundkörpers eckig, insbesondere rechteckig ausgebildet sind und sich in Richtung der Hufauflagefläche verjüngen, wobei die Nagellöcher im Bereich der Hufauflagefläche rund ausgebildet sind. Mit anderen Worten weisen die Nagellöcher (Kanäle) ausgehend von der Bodenfläche des hufeisenförmigen Grundkörpers in der Regel bis kurz vor Erreichen der anderen Seite, also der Bodenfläche, eine eckige, sich stetig verjüngende Innenfläche auf. Erst kurz vor der Hufauflagefläche ändert sich die Form der Nagellöcher von eckig in rund. Eine derartige Ausbildung der Nagellöcher hat diverse Vorteile. Die Nagellöcher von herkömmlichen Hufeisen sind dagegen durchgehend kantig und in der Regel ohne Verjüngung ausgebildet. Derartig ausgebildete Nagellöcher bewirken jedoch beim Einschlagen der Nägel in den Huf eines Tieres Verspannungen im selbigen. Für sensible Tiere, insbesondere Pferde kann dies sehr unangenehm sein und den idealen Bewegungsablauf beeinträchtigen. Hierdurch haben die Pferde gravierende Nachteile im Hinblick auf eine Einschränkung der Leistungsbereitschaft und dem Gesunderhalten der Gelenke. Indem die Nagellöcher am Lochausgang mit einem runden Querschnitt versehen sind, entstehen beim Einschlagen mit den letzten Hammerschlägen auf den Nagelkopf weniger Verspannungen des eingebrachten Hufnagels im Huf als bei kantig ausgebildeten Ausgangslöchern.

Bei einer bevorzugten Ausführungsfonn des erfindungsgemäßen Hufschutzes ist der Mittelabschnitt des hufeisenförmigen Grundkörpers (Zehenabschnitt), welcher Mittelabschnitt eine Außenseite und eine Innenseite umfasst, an seiner Außenseite abgeschrägt ausgebildet, wobei die Abschrägung von der Hufauflagefläche aus in Richtung der Innenseite des Mittelabschnittes des hufeisenförmigen Grundkörpers verläuft, wobei sich die Abschrägung teilweise in den Schenkelaußenseiten fortsetzt, vorzugsweise bis zur breitesten Stelle des Grundkörpers fortsetzt, und vorzugsweise schließlich in beiden Schenkelaußenseiten schräg nach unten in Richtung der Bodenfläche ausläuft, wobei vorzugsweise die Endbereiche der Schenkel des hufeisenförmigen Grundkörpers an ihren Außenseiten abgeschrägt ausgebildet sind, wobei die jeweilige Abschrägung in den Endbereichen der Schenkel von der Hufauflagefläche aus nach außen (von der Innenseite weg) verläuft und sich vorzugsweise bis zur breitesten Stelle des hufeisenförmigen Grundkörpers fortsetzt, wobei die jeweilige Abschrägung auf ihrem Weg zur breitesten Stelle des hufeisenförmigen Grundkörpers vorzugsweise schräg nach oben ausläuft. Die beschriebene Abschrägung im Zehenbereich bewirkt eine bessere Abrollung in der Bewegung. Zugleich wird das Hornwachstum an der Hufwand und dem Hufwinkel positiv beeinflusst. Die der Abschrägung im Zehenbereich entgegengesetzte Abschrägung im Bereich der Schenkelenden mindert die Greifgefahr, wenn bei Hufkorrekturen die Schenkelenden geweitet werden.

Es ist denkbar, dass der hufeisenförmige Grundkörper aus verformbarem Kunststoff gefertigt ist. Es ist jedoch bevorzugt, dass der hufeisenförmige Grundkörper aus Metall, insbesondere Eisen, Aluminium, Messing oder Bronze gefertigt ist. Dies bewirkt insbesondere in Verbindung mit den o.g. Füllstoffen ein besonders vorteilhaftes Hufschutzsystem.

Die vorliegende Erfindung betrifft ferner einen Kit mit den Merkmalen des Anspruchs 7. Der erfindungsgemäße Kit zeigt die o. g. Vorteile, die bereits beim erfindungsgemäßen Hufschutz dargelegt wurden.

Die vorliegende Erfindung betrifft ferner ein Verfahren zum Beschlagen eines Huftieres, insbesondere eines Pferdes mit einem Hufschutz nach einem der Ansprüche 1 bis 6 mit folgenden Schritten:
- Fixieren des hufeisenförmigen Grundkörpers am Huf des Huftieres;
- Einpressen einer Kunststoff-Füllmasse in die Einbuchtungen der Schenkel des hufeisenförmigen Grundkörpers.

Hierbei entsteht ein Hufschutz, welcher den Klirreffekt beim Auffußen auf festem Untergrund deutlich minimiert und so die o.g. Vorteile für das Tier bringt. Die Kunststoff-Füllmasse hat auch den Vorteil, dass sie zwischen der Hufauflagefläche des hufeisenförmigen Grundkörpers und dem Huf Unebenheiten ausgleichen kann. Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

In den Zeichnungen zeigen:
- Fig. 1:: eine Draufsicht auf die Bodenfläche eines hufeisenförmigen Grundkörpers eines erfindungsgemäßen Hufschutzes;
- Fig. 2:: eine Draufsicht auf die Hufauflagefläche des hufeisenförmigen Grundkörpers von Fig. 1;
- Fig. 3:: eine perspektivische Darstellung des hufeisenförmigen Grundkörpers von Fig. 1;
- Fig. 4:: eine weitere perspektivische Darstellung des hufeisenförmigen Grundkörpers von Fig. 1;
- Fig. 5:: eine Seitenansicht des hufeisenförmigen Grundkörpers von Fig. 1;
- Fig. 6:: eine perspektivische Darstellung einer weiteren Ausführungsform eines hufeisenförmigen Grundkörpers eines erfindungsgemäßen Hufschutzes;
- Fig. 7:: eine weitere perspektivische Darstellung des hufeisenförmigen Grundkörpers von Fig. 6;
- Fig. 8:: eine Draufsicht auf die Bodenfläche des hufeisenförmigen Grundkörpers von Fig. 6;
- Fig. 9:: einen Längsschnitt durch einen Schenkel des hufeisenförmigen Grundkörpers von Fig. 6 im Bereich der Einbuchtungen (siehe Schnitt gemäß gestrichelte Linie in Fig. 8).

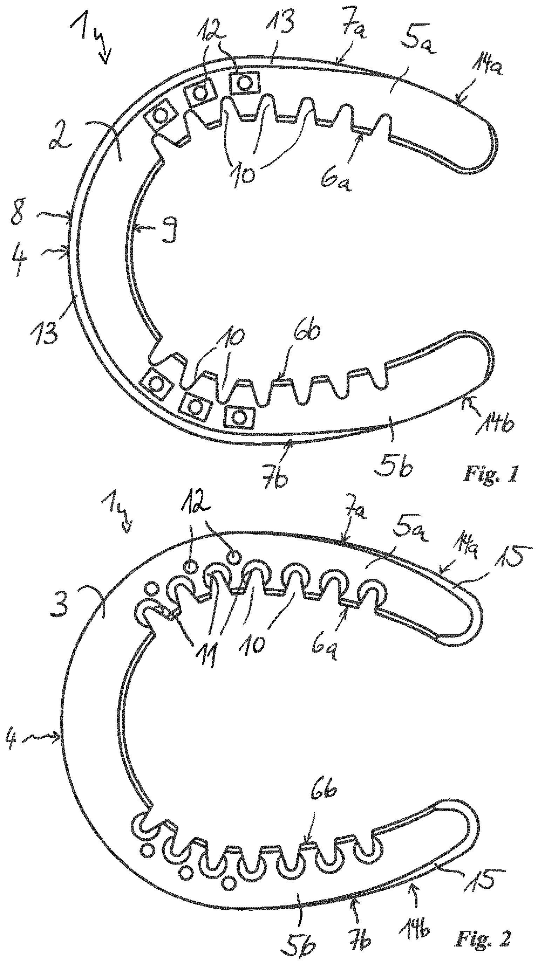

Fig. 1 zeigt eine Draufsicht auf die Bodenfläche 2 eines hufeisenförmigen Grundkörpers 1 eines erfindungsgemäßen Hufschutzes. Die Bodenfläche 2 ist diejenige Fläche, welche im montierten Zustand des hufeisenförmigen Grundkörpers 1 am Huf eines Pferdes dem Boden zugewandt ist.

Fig. 2 dagegen zeigt eine Draufsicht auf die Hufauflagefläche 3 des hufeisenförmigen Grundkörpers 1. Dies ist die Fläche, die im montierten Zustand des hufeisenförmigen Grundkörpers 1 am Pferdehuf anliegt.

Der Grundkörper 1 weist zwei von einem gemeinsamen Mittelabschnitt 4 ausgehende Schenkel 5a, 5b auf. Die Schenkel 5a und 5b weisen jeweils eine Innenseite 6a bzw. 6b und eine Außenseite 7a bzw. 7b auf. Auch der Mittelabschnitt 4 weist eine Außenseite 8 und eine Innenseite 9 auf. Die Schenkel 5a und 5b weisen an ihren Innenseiten 6a, 6b eine Mehrzahl von Einbuchtungen 10 auf. Ausgehend von der Bodenfläche 2 sind die Einbuchtungen 10 zunächst im Wesentlichen U-förmig ausgebildet. Die Einbuchtungen 10 sind jedoch nicht durchgehend gleichmäßig U-förmig ausgebildet, sondern weisen eine in Richtung der Hufauflagefläche 3 gerichtete konische Erweiterung 11 auf. Von der Hufauflagefläche aus betrachtet verjüngen sich die Einbuchtungen 10 also konisch in Richtung der Bodenfläche 2, wobei die konischen Erweiterungen 11 etwa ein Viertel der Stärke des Grundkörpers 1 einnehmen, um dann in eine gleichmäßige (nicht abgeschrägte) U-förmige Einbuchtung überzugehen.

In die Einbuchtungen 10 wird vor oder nach dem Montieren des Grundkörpers 1 an einem Pferdehuf eine Füllmasse aus verformbarem Kunststoff eingebracht. Dieser verformbare Kunststoff härtet in der Regel nach dem Einbringen noch aus und trägt zu einem besonders ausgeprägten Abschwächen des o.g. Klirreffekts bei. Hierbei haben die konischen Erweiterungen 11 der Einbuchtungen 10 gravierende Vorteile. Durch sie wird der verformbare Kunststoff im Bereich zwischen dem Pferdehuf und den Einbuchtungen gehalten und es wird verhindert, dass der Kunststoff aus den Einbuchtungen fällt. Im Bereich der konischen Erweiterungen 11 wird der Kunststoff quasi wie in einem Gefäß gehalten und vor einem Herausfallen geschützt.

Im Bereich der Einbuchtungen 10 weist der Grundkörper 1 Nagellöcher 12 auf. In der Bodenfläche 2 sind die Nagellöcher 12 rechteckig ausgebildet. Von der Bodenfläche 2 aus verjüngen sich die Nagellöcher 12 zunächst gleichmäßig von allen vier Seiten. Im Bereich der Hufauflagefläche 3 sind die Nagellöcher 12 dagegen rund ausgebildet. Die Nagellöcher 12 wechseln also von einem eckigen Querschnitt in einen runden Querschnitt, wobei die Nagellöcher 12 nur im unmittelbaren Bereich der Hufauflagefläche rund ausgebildet sind. Indem die Nagellöcher am Lochausgang mit einem runden Querschnitt versehen sind, entstehen beim Einschlagen weniger Verspannungen im Huf als bei kantig ausgebildeten Nagellöchern. Dies trägt wesentlich zu einem angenehmen Tragegefühl des Pferdes bei. Die Einbuchtungen erstrecken sich bis etwa zu den Nagellöchern 12. Beim Montieren des Grundkörpers 1 am Huf eines Pferdes wird der Grundkörper so positioniert, dass die Nagellöcher 12 im Bereich der Lamellenschicht des Hufes, die relativ weich ist, positioniert sind. Die Hufnägel lassen sich dann leicht einschlagen. Der äußere Bereich des Hufes (nach der Lamellenschicht) ist relativ hart ausgebildet. Deshalb reichen die Einbuchtungen auch nur bis zu den Nagellöchern 12. Der äußere Bereich des Grundkörpers 1 ist frei von Einbuchtungen und daher ebenfalls hart ausgebildet. Es wird so die Anatomie des Hufes imitiert.

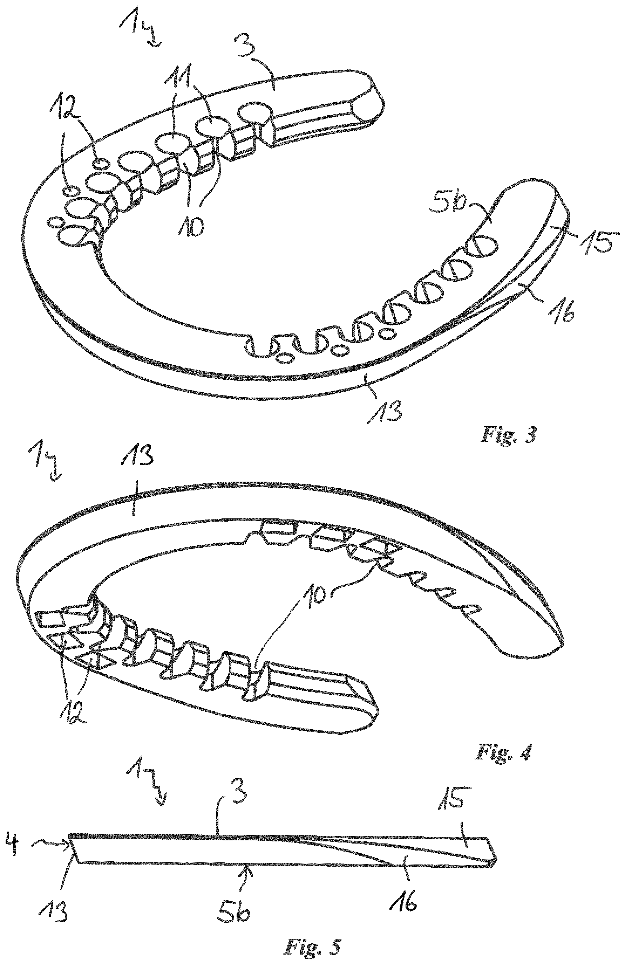

Der Mittelabschnitt 4 ist an seiner Außenseite 8 abgeschrägt ausgebildet. Diese Abschrägung 13 ist in den Figuren 1, 3, 4, 5, 6 und 7 gut zu erkennen. Die Abschrägung in der Außenseite 8 des Mittelabschnitts 4 verläuft von der Hufauflagefläche 3 aus in Richtung der Innenseite 9. Dadurch überragt die Hufauflagefläche 3 die Bodenfläche 2 im vorderen Bereich des Grundkörpers 1, was beispielsweise in den Figuren 1, 3, 4, 5, 6 und 7 gut zu erkennen ist. Die Abschrägung 13 setzt sich bis zur breitesten Stelle des Grundkörpers 1 in den Schenkelaußenseiten 7a, 7b fort und läuft schließlich schräg nach unten in Richtung der Bodenfläche 2 aus. Auch die Endbereiche 14a, 14b der Schenkel 5a, 5b weisen an ihren Außenseiten 7a, 7b jeweils eine Abschrägung 15 auf. Die Abschrägungen 15 in den Endbereichen 14a, 14b verlaufen von der Hufauflagefläche 3 aus nach außen und setzen sich bis zur breitesten Stelle des Grundkörpers 1 fort. Auf ihrem Weg vom Schenkelende bis zur breitesten Stelle des Grundkörpers 1 laufen die Abschrägungen 15 schräg nach oben aus. Die Abschrägungen 13 und 15 überlappen teilweise. Zwischen der Abschrägung 13 und der Abschrägung 15 eines Schenkels ist ein gerader nicht abgeschrägter Bereich 16 angeordnet.

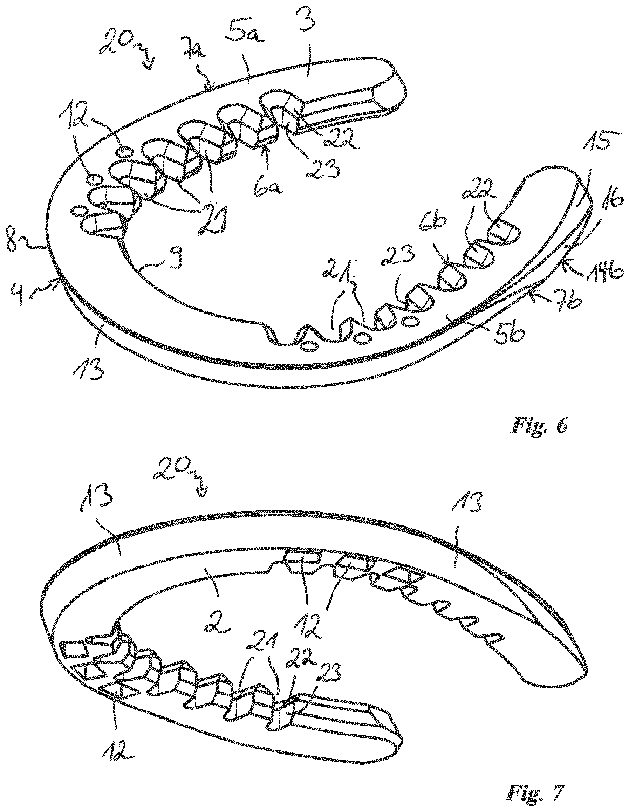

Die Figuren 6 bis 8 zeigen eine weitere Ausführungsform eines hufeisenförmigen Grundkörpers 20 eines erfindungsgemäßen Hufschutzes. Die Ausführungsform 20 unterscheidet sich von der Ausführungsform 1 aus den Figuren 1 bis 5 lediglich in der Form der Einbuchtungen 21. Die übrigen Merkmale sind identisch und somit auch mit identischen Bezugszeichen wie in den Figuren 1 bis 5 gekennzeichnet.

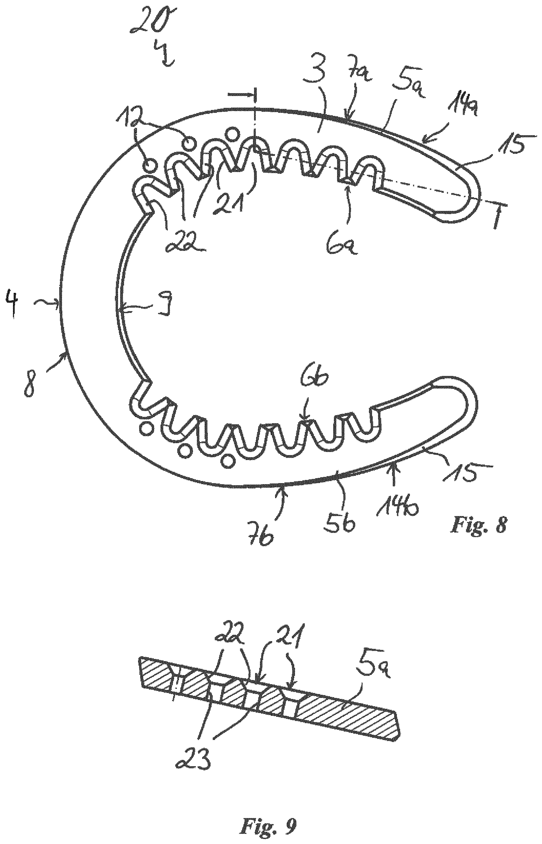

Im Gegensatz zu den konischen Erweiterungen 11 der Einbuchtungen 10 im hufeisenförmigen Grundkörper 1, welche im Bereich der Hufauflagefläche 3 einen im Wesentlichen halbmondförmigen Querschnitt aufweisen, ist die Erweiterung/Verjüngung der U-förmigen Einbuchtungen 21 im Bereich der Hufauflagefläche 3 als gleichmäßige Fase 22, die die jeweils gesamte Ausbuchtung 21 umfasst, ausgebildet. Ebenso wie beim Grundkörper 1 ist auch beim Grundkörper 20 eine von der Hufauflagefläche 3 ausgehende Verjüngung der Einbuchtungen 21 vorgesehen. Die Verjüngung setzt sich jedoch nicht bis zur Bodenfläche 2 fort, sondern geht in einen geraden Bereich 23 (siehe Fig. 9) über. Auch diese Erweiterungen/Verjüngungen 22 dienen einem Fixieren von einzubringendem Kunststoff in die Einbuchtungen 21.

Es versteht sich, dass die oben beschriebenen Einbuchtungen auch andere Formen aufweisen können. So können die Einbuchtungen auch die Form von Schlitzen aufweisen oder V-förmige oder auch durchgängig kreisförmige Einbuchtungen sein. Die Dicke des hufeisenförmigen Grundkörpers ist in der Regel 3 bis 15 mm. Der hufeisenförmige Grundkörper ist in der Regel gleichmäßig dick ausgeführt. Es kann jedoch auch vorteilhaft sein, dass die Dicke des hufeisenförmigen Grundkörpers vom Mittelabschnitt bis zu den Schenkelenden ab- oder zunimmt, sodass beispielsweise die Dicke im Bereich des Mittelabschnitts 15 mm bzw. 3 mm und an den Schenkelenden 3 mm bzw. 15 mm beträgt. Hierdurch können beispielsweise fehlerhafte Zehenwinkel ausgeglichen werden.

## Patentansprüche

1. Hufschutz für Pferde oder dergleichen Huftiere mit einem eine Hufauflagefläche (3) und eine Bodenfläche (2) aufweisenden hufeisenförmigen Grundkörper (1, 20), welcher zwei von einem gemeinsamen Mittelabschnitt (4) ausgehende Schenkel (5a, 5b) mit jeweils einer Außen- (7a, 7b) und einer Innenseite (6a, 6b) aufweist, wobei die Schenkel des hufeisenförmigen Grundkörpers an ihrer Innenseite eine Mehrzahl von Einbuchtungen (10, 21) aufweisen, wobei dem hufeisenförmigen Grundkörper (1, 20) eine Füllmasse (18) aus verformbarem Kunststoff zugeordnet ist, die vor oder nach dem Montieren des hufeisenförmigen Grundkörpers am Huf eines Tieres in die Einbuchtungen (10, 21) eingebracht wird, **dadurch gekennzeichnet, dass** die Einbuchtungen (10, 21) jeweils eine Abschrägung (11, 22) aufweisen, die derart ausgebildet ist, dass sich die Einbuchtungen von der Hufauflagefläche (3) in Richtung der Bodenfläche (2) mindestens abschnittsweise verjüngen.

2. Hufschutz nach Anspruch 1, **dadurch gekennzeichnet, dass** die Füllmasse aus epoxidhaltigem Kunststoff, wie beispielsweise Epoxidharz, insbesondere aus epoxidhaltigem Kunststoff mit Metallgehalt besteht.

3. Hufschutz nach einem der vorhergehenden Ansprüche, **dadurch gekennzeichnet, dass** die Einbuchtungen (10, 21) im Wesentlichen U-förmig und/oder kreisbogenförmig ausgebildet sind.

4. Hufschutz nach einem der vorhergehenden Ansprüche, **dadurch gekennzeichnet, dass** der hufeisenförmige Grundkörper (1, 20) eine Mehrzahl von durchgreifenden Nagellöchern (12) zum Hindurchführen von Hufnägeln aufweist, wobei die Nagellöcher in der Bodenfläche (2) eckig, insbesondere rechteckig ausgebildet sind und sich in Richtung der Hufauflagefläche (3) verjüngen, wobei die Nagellöcher im Bereich der Hufauflagefläche vorzugsweise rund, insbesondere kreisrund ausgebildet sind.

5. Hufschutz nach einem der vorhergehenden Ansprüche, **dadurch gekennzeichnet, dass** der Mittelabschnitt (4) des hufeisenförmigen Grundkörpers (1, 20), welcher Mittelabschnitt eine Außenseite (8) und eine Innenseite (9) umfasst, an seiner Außenseite (8) abgeschrägt ausgebildet ist, wobei die Abschrägung (13) von der Hufauflagefläche (3) aus in Richtung der Innenseite (9) des Mittelabschnitts (4) verläuft, wobei sich die Abschrägung teilweise in den Schenkelaußenseiten (7a, 7b) fortsetzt, vorzugsweise bis zur breitesten Stelle des Grundkörpers fortsetzt, und vorzugsweise schließlich in beiden Schenkelaußenseiten schräg nach unten in Richtung der Bodenfläche (2) ausläuft, wobei vorzugsweise die Endbereiche (14a, 14b) der Schenkel (5a, 5b) des hufeisenförmigen Grundkörpers (1, 20) an ihren Außenseiten abgeschrägt ausgebildet sind, wobei die jeweilige Abschrägung (15) in den Endbereichen von der Hufauflagefläche (3) aus nach außen verläuft und sich vorzugsweise bis zur breitesten Stelle des hufeisenförmigen Grundkörpers fortsetzt, wobei die jeweilige Abschrägung auf ihrem Weg dorthin vorzugsweise schräg nach oben ausläuft.

6. Hufschutz nach einem der vorhergehenden Ansprüche, **dadurch gekennzeichnet, dass** der hufeisenförmige Grundkörper aus Metall, insbesondere Eisen, Aluminium, Messing oder Bronze gefertigt ist.

7. Kit, umfassend
a) einen eine Hufauflagefläche (3) und eine Bodenfläche (2) aufweisenden hufeisenförmigen Grundkörper (1, 20), welcher zwei von einem gemeinsamen Mittelabschnitt (4) ausgehende Schenkel (5a, 5b) mit jeweils einer Außen- (7a, 7b) und einer Innenseite (6a, 6b) aufweist, wobei die Schenkel des hufeisenförmigen Grundkörpers an ihrer Innenseite eine Mehrzahl von Einbuchtungen (10, 21) aufweisen, wobei die Einbuchtungen (10, 21) jeweils eine Abschrägung (11, 22) aufweisen, die derart ausgebildet ist, dass sich die Einbuchtungen von der Hufauflagefläche (3) in Richtung der Bodenfläche (2) mindestens abschnittsweise verjüngen, sowie
b) mindestens eine Kunststoffmasse zum Einbringen in die Einbuchtungen (10, 21) des hufeisenförmigen Grundkörpers.

8. Verfahren zum Beschlagen eines Huftieres, insbesondere Pferdes, mit einem Hufschutz nach einem der Ansprüche 1 bis 6 mit folgenden Schritten:
- Fixieren des hufeisenförmigen Grundkörpers (1, 20) am Huf des Huftieres;
- Einpressen einer Kunststoff-Füllmasse in die Einbuchtungen (10, 21) der Schenkel (5a, 5b) des hufeisenförmigen Grundkörpers.

## Claims

1. A hoof protection device for horses or other hoofed animals, the hoof protection device comprising a horseshoe-shaped body (1, 20) having a hoof support surface (3) and a bottom surface (2), the horseshoe-shaped body comprising two legs (5a, 5b) which extend from a shared middle portion (4) and each have an outer side (7a, 7b) and an inner side (6a, 6b), the legs of the horseshoe-shaped body having a plurality of recesses (10, 21) on their inner side, a filling compound (18) made of deformable plastic being associated with the horseshoe-shaped body (1, 20), the filling compound (18) being introduced into the recesses (10, 21) before or after the installation of the horseshoe-shaped body on the hoof of an animal, **characterized in that** the recesses (10, 21) each have a chamfer (11, 22) which is realized in such a manner that the recesses at least partially taper from the hoof support surface (3) toward the bottom surface (2).

2. The hoof protection device according to claim 1, **characterized in that** the filling compound consists of epoxide-containing plastic, such as epoxy resin, in particular of epoxide-containing plastic having a metal content.

3. The hoof protection device according to any one of the preceding claims, **characterized in that** the recesses (10, 21) are substantially U-shaped and/or in the shape of a circular arc.

4. The hoof protection device according to any one of the preceding claims, **characterized in that** the horseshoe-shaped body (1, 20) has a plurality of nail through holes (12) for passing horseshoe nails through them, the nail holes being angular, in particular rectangular, in the bottom surface (2) and tapering toward the hoof support surface (3), the nail holes being round, in particular circular, in the area of the hoof support surface.

5. The hoof protection device according to any one of the preceding claims, **characterized in that** the middle portion (4) of the horseshoe-shaped body (1, 20), which comprises an outer side (8) and an inner side (9), is beveled at its outer side (8), the bevel (13) extending from the hoof support surface (3) toward the inner side (9) of the middle portion (4), the bevel partially continuing in the leg outer sides (7a, 7b), preferably as far as to the broadest point of the body, and preferably ending in a downward slope in the direction of the bottom surface (2) in both leg outer sides, the end portions (14a, 14b) of the legs (5a, 5b) of the horseshoe-shaped body (1, 20) preferably being beveled at their outer sides, each bevel (15) in the end portions extending outward from the hoof support surface (3) and preferably continuing as far as to the broadest point of the horseshoe-shaped body, each bevel preferably ending in an upward slope on its way there.

6. The hoof protection device according to any one of the preceding claims, **characterized in that** the horseshoe-shaped body is made of metal, in particular iron, aluminum, brass or bronze.

7. A kit, comprising
a) a horseshoe-shaped body (1, 20) having a hoof support surface (3) and a bottom surface (2), the body comprising two legs (5a, 5b) which extend from a shared middle portion (4) and each have an outer side (7a, 7b) and an inner side (6a, 6b), the legs of the horseshoe-shaped body having a plurality of recesses (10, 21) on their inner side, the recesses (10, 21) each having a chamfer (11, 22) which is realized in such a manner that the recesses at least partially taper from the hoof support surface (3) toward the bottom surface (2), and
b) at least one plastic compound for being introduced into the recesses (10, 21) of the horseshoe-shaped body.

8. A method for shoeing a hoofed animal, in particular a horse, with a hoof protection device according to any one of claims 1 to 6, the method comprising the following steps:
- fixing the horseshoe-shaped body (1, 20) to the hoof of the hoofed animal;
- injecting a plastic filling compound into the recesses (10, 21) of the legs (5a, 5b) of the horseshoe-shaped body.

## Revendications

1. Protection de sabot pour des chevaux ou des autres ongulés, le protection de sabot comprenant un corps (1, 20) en forme de fer à cheval ayant une surface d'appui de sabot (3) et une surface inférieure (2), le corps en forme de fer à cheval comprenant deux branches (5a, 5b) qui s'étendent à partir d'une partie centrale (4) commune et qui ont chacune un côté extérieur (7a, 7b) et un côté intérieur (6a, 6b), les branches du corps en forme de fer à cheval ayant une pluralité d'échancrures (10, 21) sur leur côté intérieur, une matière de remplissage (18) en matière plastique déformable étant associée au corps (1, 20) en forme de fer à cheval, la matière de remplissage (18) étant introduite dans les échancrures (10, 21) avant ou après le montage du corps en forme de fer à cheval sur le sabot d'un animal,
**caractérisée en ce que**
chaque échancrure (10, 21) a un chanfrein (11, 22) qui est réalisé de telle manière que les échancrures se rétrécissent au moins en partie à partir de la surface d'appui de sabot (3) vers la surface inférieure (2).

2. Protection de sabot selon la revendication 1, **caractérisée en ce que** la matière de remplissage consiste en matière plastique contenant de l'époxyde, tel que la résine époxy, notamment en matière plastique contenant de l'époxyde et ayant une teneur en métal.

3. Protection de sabot selon l'une quelconque des revendications précédentes, **caractérisée en ce que** les échancrures (10, 21) sont essentiellement en forme de U et/ou en forme d'un arc circulaire.

4. Protection de sabot selon l'une quelconque des revendications précédentes, **caractérisée en ce que** le corps (1, 20) en forme de fer à cheval a une pluralité de trous de clou (12) traversants pour insérer des clous à ferrer, les trous de clou étant anguleux, notamment rectangulaires, dans la surface inférieure (2) et se rétrécissant vers la surface d'appui de sabot (3), les trous de clou étant ronds, notamment circulaires, dans la région de la surface d'appui de sabot.

5. Protection de sabot selon l'une quelconque des revendications précédentes, **caractérisée en ce que** la partie centrale (4) du corps (1, 20) en forme de fer à cheval, qui comprend un côté extérieur (8) et un côté intérieur (9), est biseautée sur son côté extérieur (8), le biseau (13) s'étendant à partir de la surface d'appui de sabot (3) vers le côté intérieur (9) de la partie centrale (4), le biseau continuant partiellement dans les côtés extérieurs (7a, 7b) des branches, de préférence jusqu'au point le plus large du corps, et se terminant de préférence par une pente vers le bas dans la direction de la surface inférieure (2) dans les côtés extérieurs de les deux branches, les parties d'extrémité (14a, 14b) des branches (5a, 5b) du corps (1, 20) en forme de fer à cheval étant de préférence biseautées sur leurs côtés extérieurs, chaque biseau (15) dans les parties d'extrémité s'étendant vers l'extérieur à partir de la surface d'appui de sabot (3) et continuant de préférence jusqu'au point le plus large du corps en forme de fer à cheval, chaque biseau se terminant de préférence par une pente vers le haut sur son parcours.

6. Protection de sabot selon l'une quelconque des revendications précédentes, **caractérisée en ce que** le corps en forme de fer à cheval est fabriqué en métal, notamment en fer, en aluminium, en laiton ou en bronze.

7. Kit, comprenant
a) un corps (1, 20) en forme de fer à cheval ayant une surface d'appui de sabot (3) et une surface inférieure (2), le corps en forme de fer à cheval comprenant deux branches (5a, 5b) qui s'étendent à partir d'une partie centrale (4) commune et qui ont chacune un côté extérieur (7a, 7b) et un côté intérieur (6a, 6b), les branches du corps en forme de fer à cheval ayant une pluralité d'échancrures (10, 21) sur leur côté intérieur, chaque échancrure (10, 21) ayant un chanfrein (11, 22) qui est réalisé de telle manière que les échancrures se rétrécissent au moins en partie à partir de la surface d'appui de sabot (3) vers la surface inférieure (2), et
b) au moins une matière plastique destinée à être introduite dans les échancrures (10, 21) du corps en forme de fer à cheval.

8. Procédé pour ferrer un ongulé, notamment un cheval, avec une protection de sabot selon l'une quelconque des revendications 1 à 6, le procédé comprenant les étapes suivantes :
- attacher le corps (1, 20) en forme de fer à cheval au sabot de l'ongulé ;
- injecter une matière plastique de remplissage dans les échancrures (10, 21) des branches (5a, 5b) du corps en forme de fer à cheval.
